# FASCICULE DE BREVET EUROPEEN

(11) **EP 3 063 930 B1**
(45) Date de publication et mention de la délivrance du brevet: **28.12.2022**
(21) Numéro de dépôt: 14805998.3
(22) Date de dépôt: 30.10.2014
(51) Int. Cl.: H04N 1/32, G06T 1/00, G10L 19/018

(54) **PROCÉDÉ D'AUGMENTATION DE LA SENSIBILITÉ D'UN DÉTECTEUR DE FILIGRANE**
VERFAHREN ZUR ERHÖHUNG DER EMPFINDLICHKEIT EINES WASSERZEICHENDETEKTORS
METHOD FOR INCREASING THE SENSITIVITY OF A WATERMARK DETECTOR

(30) Priorité: 31.10.2013 FR 1360656
(43) Date de publication de la demande: 07.09.2016
(73) Titulaire: Dolby Laboratories Licensing Corporation, San Francisco, CA 94103 (US)
(72) Inventeur: NGUYEN, Philippe, F-35700 Rennes (FR); RIZKO, Camille, Burbank, California CA 91501 (US)
(74) Mandataire: Ipside
(86) Numéro de dépôt international: PCT/FR2014/052768
(87) Numéro de publication internationale: WO 2015/063426

(56) Documents cités:
- JP-A- 2000 151 968
- US-A1- 2004 042 636
- US-B1- 7 058 979
- DEEPA KUNDUR ET AL: "Diversity and Attack Characterization for Improved Robust Watermarking", IEEE TRANSACTIONS ON SIGNAL PROCESSING, IEEE SERVICE CENTER, NEW YORK, NY, US, vol. 49, no. 10, 1 octobre 2001 (2001-10-01), XP011059426, ISSN: 1053-587X
- BAUDRY S ET AL: "Analyses of error correction strategies for typical communication channels in watermarking", SIGNAL PROCESSING, ELSEVIER SCIENCE PUBLISHERS B.V. AMSTERDAM, NL, vol. 81, no. 6, 1 juin 2001 (2001-06-01), pages 1239-1250, XP004241224, ISSN: 0165-1684, DOI: 10.1016/S0165-1684(01)00041-X cité dans la demande

## Description

La présente invention vise un procédé de traitement d'images, comportant une étape d'augmentation de la sensibilité d'un détecteur de filigrane (également nommé "tatouage numérique" en français et "watermark" en anglais).

Elle relève du domaine des procédés de traitement d'images, et notamment de signature de ces images (stéganographie, tatouage et watermarking).

### Préambule et art antérieur

Le désir d'attacher à une image ou une séquence d'images une signature est lié au problème de la copie illégale de ces images. Un tel besoin de signature des images de façon cachée dans l'image est connu depuis des décennies.

La signature d'une image (technique dite de stéganographie) consiste généralement en l'insertion, au sein des pixels de l'image, de modifications de la valeur de certains paramètres (leur luminance par exemple) de certains de ces pixels, en fonction d'un message à insérer. Diverses techniques de signature ont été développées au cours des années, par exemple pour en augmenter la robustesse face à des copies successives d'une image, et ces techniques sont aujourd'hui largement répandues.

Les procédés de signature d'image sont naturellement associés à des procédés de détection de l'existence d'une signature dans l'image, et de lecture du message enfoui dans l'image.

Le processus d'insertion puis de récupération (encore appelé processus d'extraction) de filigrane est considéré généralement, à juste titre, comme un procédé de communication.

Un signal, le filigrane, porteur d'une information à dissimuler, la charge ("payload" en anglais), est mêlé à un autre signal, appelé signal de couverture. Sous l'angle du procédé de communication précédemment défini, le signal de couverture est un bruit, c'est-à-dire un phénomène perturbant la communication.

Pour pallier les bruits qui provoquent des erreurs, le concepteur est conduit à introduire une redondance importante dans la transmission des messages. Lorsque les taux d'erreurs sont élevés, la forme de redondance la plus simple, qui est la répétition des messages, est la plus performante (voir par exemple à ce sujet le document "Analyses of error correction stratégies for typical communication channels in watermarking", Séverine Baudry, Jean-François Delaigle, Bülent Sankur, Benoît Macq, Henri Maître: Signal Processing 81(6): 1239-1250 (2001)). La performance est, dans ces situations, considérée comme le ratio : charge de calcul / capacité de correction.

Lors de la reconstruction du message initial (ou opération d'extraction du filigrane), un procédé classiquement utilisé d'exploitation de la répétition est le vote majoritaire encore appelé décodage majoritaire. Chaque répétition d'un élément de message "vote" pour la valeur qu'elle estime être la valeur initiale avant la perturbation de la communication par les bruits.

La répétition du message consiste à transmettre plusieurs fois (plusieurs dizaines, centaines ou milliers de fois) chacun des symboles, ou des bits dans le cas binaire, composant le message.

Le décodage majoritaire, ou vote majoritaire, consiste à retenir comme valeur de symbole en sortie de décodage, la valeur la plus souvent observée à la réception, réception se trouvant par ailleurs perturbée par du bruit.

Cette méthode est examinée, par exemple, dans l'article "Analyses of error correction stratégies for typical communication channels in watermarking", Séverine Baudry, Jean-François Delaigle, Bülent Sankur, Benoît Macq, Henri Maître: Signal Processing 81(6): 1239-1250 (2001)).

Le procédé peut, cependant, être considéré comme étant sous optimal, car les individus fortement perturbés par les bruits ont le même poids dans la décision finale que ceux qui ont été épargnés.

Le document « Diversity and Attack Characterization for Improved Robust Watermarking », Deepa Kundur, Dimitrios Hatzinakos, décrit un procédé de détection et d'extraction d'un filigrane dans un signal numérique, ledit filigrane étant composé par la répétition de composantes élémentaires d'une charge à transmettre. Dans cette méthode, toutes les répétitions détectées sont fusionnées pour déterminer une valeur finale à retenir d'une composante élémentaire. Le temps de calcul du procédé et la qualité de décodage du filigrane lorsque le filigrane est fortement bruité ne sont alors pas optimaux.

La présente invention vise à remédier notamment les inconvénients susmentionnés.

### Exposé de l'invention

L'invention vise à cet effet en premier lieu un procédé selon la revendication 1 et un équipement de décodage selon la revendication 12.

Le procédé de traitement d'images tel qu'exposé permet ainsi une augmentation de la sensibilité d'un détecteur de filigrane, dans un procédé de détection et d'extraction d'un tatouage numérique utilisant la redondance.

Plus généralement, l'invention vise la communication d'information en environnement fortement perturbateur (également nommé environnement fortement bruité). Un cas typique de ces situations de communication est le tatouage de contenu.

Le procédé exposé permet l'extraction de message (ici un filigrane) en environnement fortement bruité.

L'invention propose un procédé de décodage ayant une capacité de correction plus importante que le vote majoritaire, tel que cité plus haut, ce qui permet d'augmenter la sensibilité des appareils de détection et d'extraction des tatouages numériques.

Le procédé s'applique à la reconstitution d'un message que l'on a répété un certain nombre de fois. Son utilisation permet de transformer les répétitions, fortement erronées, en un unique message plus fiable, avec une capacité de tolérance aux erreurs plus importante que les classiques schémas de votes ou de décodages majoritaires.

Des mises en oeuvre particulières sont décrites par les revendications dépendantes 2-11.

L'invention vise sous un second aspect un équipement de décodage de tatouage numérique, caractérisé en ce qu'il comporte des moyens de mettre en oeuvre un procédé tel qu'exposé.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur la figure annexée qui représente :

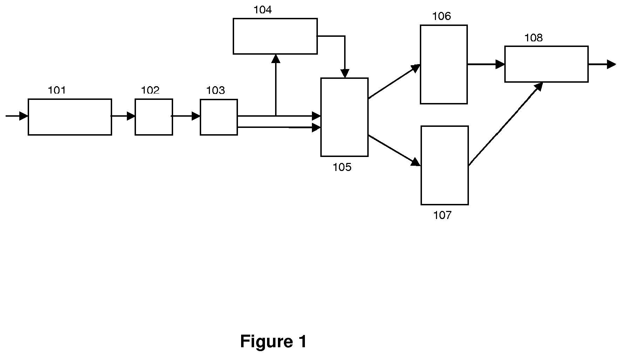

Figure 1 : un organigramme des étapes du procédé.

### Description détaillée d'un mode de réalisation de l'invention

Pour la suite de la description, on définit les termes suivants :
On nomme **filigrane** un ensemble de **répétitions** des **composantes élémentaires** formant un **message** (ou charge) à insérer au sein d'un **signal de couverture,** ici une image numérique. On nomme **individualité** l'échantillon de données résultant de la détection et de la lecture dans une zone de l'image d'une répétition d'une composante élémentaire du filigrane.

Comme on l'a vu, la réalisation d'un système d'insertion d'un filigrane dans un signal de couverture (tatouage numérique d'images) requiert la mise au point de deux catégories de procédés :
1) ceux qui permettent d'insérer un message dans une image ou un autre fichier (par exemple audionumérique);
2) ceux qui permettent d'exploiter les marques, autrement dit de détecter et déterminer les éléments du message enfoui dans ces images.

Il est clair que le procédé d'insertion d'un filigrane dans une image ou une séquence d'images (ou un autre fichier, par exemple audionumérique) est, a priori, destiné à être utilisé de façon systématique sur toutes les images générées par un utilisateur. Par contre, le procédé de détection et lecture d'un message enfoui dans une image est destiné à être utilisé beaucoup plus rarement, typiquement lorsqu'un doute existe quant à la provenance réelle d'une image.

On entend ici par images aussi bien des images uniques que des séquences d'images, par exemple des séquences vidéo. De façon plus générale, le procédé reste utilisable sans modification significative pour le traitement de messages codés au sein de fichiers audionumériques.

L'invention propose un procédé particulier d'organisation de la détection et de l'extraction des valeurs de filigrane constituant le message enfoui.

Dans le présent exemple de réalisation, l'invention est mise en oeuvre sous forme d'application logicielle exécutée sur un ordinateur, par exemple de type PC.

Cette application logicielle reçoit en entrée une ou des images numériques ou numérisées, susceptibles de contenir un filigrane à détecter et lire. L'application logicielle fournit en sortie le contenu du message détecté si un tel message a été détecté.

On suppose ici que les images ont été codées (c'est-à-dire qu'un message y a été inséré) avec un procédé utilisant une redondance du message à insérer dans l'image. On suppose que le message a répété un certain nombre de fois dans l'image et / ou la séquence d'images pour en assurer la transmission au travers d'un environnement perturbateur, notamment fortement bruité.

On considère le cas où le message enfoui est formé d'une séquence d'éléments faisant partie d'un alphabet A. Il peut notamment mais non limitativement s'agir de valeurs binaires ou de nombres réels ou complexes, ou d'une combinaison de ces valeurs.

Dans une étape 101, le signal à analyser (signal tatoué) subit une détection élémentaire produisant les individualités, c'est-à-dire des échantillons de données issues de la répétition d'une composante élémentaire du filigrane.

Dans une étape 102, les individualités sont stockées temporairement pour faciliter leur usage par les étapes de traitements suivants.

Dans une étape 103, des caractéristiques de qualité de chaque individualité, caractéristiques encore appelées attributs de qualité, sont évaluées.

Dans une étape 104, des statistiques sont effectuées sur les attributs de qualité pour déterminer dynamiquement si besoin les paramètres de fonctionnement de l'étape 105.

Dans une étape 105 les individualités sont triées en au moins deux classes.

Dans les étapes 106 et 107, les individualités sont stockées temporairement pour faciliter leur usage par les traitements suivants.

Dans une étape 108, les individualités associées à une même composante élémentaire du message sont utilisées pour prendre une décision sur la valeur de la composante élémentaire (valeur sur l'alphabet A précédemment cité).

Dans une variante de mise en oeuvre, le signal de couverture est une image (ou une séquence d'images) et l'image, une fois codée, comporte une pluralité de blocs filigranés disposés à divers endroits de l'image. Dans ce cas, le procédé comporte, par exemple, des étapes telles que listées ci-dessous.

Dans une étape, on détermine dans l'image l'emplacement d'un bloc filigrané.

Dans une étape ultérieure, on extrait de l'image des échantillons de données (individualité d'une répétition au sens défini plus haut). Ces étapes de détermination et d'extraction d'une individualité sont réalisées par des techniques connues en soi de l'homme du métier.

Dans une étape ultérieure, on affecte un attribut de qualité à chaque individualité extraite.

Un attribut de qualité (valeur scalaire) est évalué pour chaque individualité (répétition d'un élément de message). Les individualités (répétitions) sont classées par valeur d'attributs décroissants. Les individualités ayant des attributs de qualité trop faible sont écartées du processus de détermination final de la valeur à retenir pour la composante élémentaire du message.

Dans une étape ultérieure, on effectue un tri des individualités selon cet attribut de qualité et les statistiques effectuées sur la population des valeurs pris par les attributs présents.

La sélection des individualités s'effectue par le biais d'un classement suivant les fiabilités individuelles puis par le regroupement en au moins deux classes ; la classe A des échantillons lauréats et une classe B des échantillons mineurs.

Dans ce cas, plus particulièrement, la frontière entre les domaines est évaluée par un calcul statistique sur les populations constituées par les valeurs de qualité individuelle.

La fusion des individualités issues de la répétition d'une même composante élémentaire est réalisée par sommation.

La fusion des individualités issues de la répétition d'une même composante élémentaire est réalisée par sommation pondérée, la pondération étant déterminée par une fonction de la qualité de chaque échantillon.

### Avantages

Le procédé de détection de filigrane, tel qu'exposé, s'applique à la reconstitution d'un message que l'on a répété un certain nombre de fois. Son utilisation permet de transformer les répétitions, fortement erronées, en un unique message plus fiable, avec une capacité de tolérance aux erreurs plus importante que les classiques schémas de votes ou de décodages majoritaires.

## Revendications

1. Procédé pour déterminer une charge d'un filigrane, tatouage numérique, dans un signal numérique, ledit filigrane étant composé par des répétitions de composantes élémentaires de ladite charge, ledit procédé visant à déterminer une valeur à retenir pour chaque composante élémentaire, ledit procédé comportant, pour chaque composante élémentaire :
- une étape (101) de détection de répétitions de la composante élémentaire dans le signal numérique,
**caractérisé en ce que** le procédé comporte en outre :
- une étape (103) d'affectation d'au moins un attribut de qualité à chaque répétition de la composante élémentaire, et
- une étape (105) de tri des répétitions de la composante élémentaire suivant une fonction des attributs de qualité de ces répétitions, et
- une étape de sélection de certaines répétitions, nommées individualités, d'une composante élémentaire pour écarter des répétitions de qualité trop faible, et
- une étape de fusion des répétitions sélectionnées par sommation pondérée, la pondération étant déterminée par une fonction de la qualité de chaque individualité, et
- une étape (108) de détermination d'une valeur à retenir pour la composante élémentaire à partir d'un résultat de la sommation pondérée.

2. Procédé selon la revendication 1, **caractérisé en ce que** l'attribut de qualité de chaque répétition d'une composante élémentaire est la fiabilité de cette répétition.

3. Procédé selon l'une quelconque des revendications 1 à 2, **caractérisé en ce qu'**un attribut de qualité sous forme de valeur scalaire est évalué pour chaque répétition d'une composante élémentaire.

4. Procédé selon la revendication 3, **caractérisé en ce que** les répétitions d'une même composante élémentaire sont classées par valeur d'attribut décroissant.

5. Procédé selon l'une quelconque des revendications 1 à 4, **caractérisé en ce que** les composantes élémentaires sont binaires.

6. Procédé selon l'une quelconque des revendications 1 à 4, **caractérisé en ce que** les composantes élémentaires sont des grandeurs réelles, c'est-à-dire des valeurs dans l'ensemble des nombres réels.

7. Procédé selon l'une quelconque des revendications 1 à 6, **caractérisé en ce que** la sélection des individualités s'effectue par le biais d'un classement suivant les fiabilités individuelles, puis par le regroupement en deux classes ; une classe des individualités lauréates et une classe des individualités mineures.

8. Procédé selon la revendication 7, **caractérisé en ce que** la frontière entre les domaines des individualités lauréates et des individualités mineures est évaluée par un calcul statistique sur la population totale ou partielle des répétitions de composantes élémentaires.

9. Procédé selon l'une quelconque des revendications 1 à 8, **caractérisé en ce que** le signal numérique est représentatif d'une image fixe.

10. Procédé selon l'une quelconque des revendications 1 à 8, **caractérisé en ce que** le signal numérique est représentatif d'une séquence d'images animées.

11. Procédé selon l'une quelconque des revendications 1 à 8, **caractérisé en ce que** le signal numérique est représentatif d'une séquence sonore.

12. Equipement de décodage de tatouage numérique, **caractérisé en ce qu'**il comporte des moyens de mettre en oeuvre un procédé selon l'une quelconque des revendications 1 à 11.

## Patentansprüche

1. Verfahren zum Bestimmen einer Ladung eines Wasserzeichens, einer digitalen Tätowierung, in einem digitalen Signal, wobei das Wasserzeichen aus Wiederholungen von elementaren Komponenten der Ladung zusammengesetzt ist, wobei das Verfahren darauf abzielt, einen festzuhaltenden Wert für jede elementare Komponente zu bestimmen, wobei das Verfahren für jede elementare Komponente Folgendes umfasst:
- einen Schritt (101) der Detektion von Wiederholungen der elementaren Komponente in dem digitalen Signal,
**dadurch gekennzeichnet, dass** das Verfahren weiter Folgendes umfasst:
- einen Schritt (103) der Zuweisung wenigstens eines Qualitätsmerkmals zu jeder elementaren Komponente, und
- einen Schritt (105) des Sortierens der Wiederholungen der elementaren Komponente gemäß einer Funktion der Qualitätsmerkmale dieser Wiederholungen, und
- einen Schritt des Auswählens von bestimmten Wiederholungen, Individualitäten genannt, einer elementaren Komponente, um die Wiederholungen von zu schwacher Qualität zu entfernen, und
- einen Schritt der Verschmelzung der durch gewichtete Summierung ausgewählten Wiederholungen, wobei die Gewichtung in Abhängigkeit von dem mindestens einen Qualitätsmerkmal bestimmt wird, das jeder Individualität zugeordnet ist, und
- einen Schritt (108) der Bestimmung eines festzuhaltenden Wertes für die elementare Komponente aus einem Ergebnis der gewichteten Summierung.

2. Verfahren nach Anspruch 1, **dadurch gekennzeichnet, dass** das Qualitätsmerkmal jeder Wiederholung einer elementaren Komponente die Zuverlässigkeit dieser Wiederholung ist.

3. Verfahren nach einer der Ansprüche 1 bis 2, **dadurch gekennzeichnet, dass** ein Qualitätsmerkmal in Form eines Skalarwertes für jede Wiederholung einer elementaren Komponente bewertet wird.

4. Verfahren noch Anspruch 3, **dadurch gekennzeichnet, dass** die Wiederholungen einer selben elementaren Komponente nach absteigendem Merkmalswert geordnet werden.

5. Verfahren nach einem der Ansprüche 1 bis 4, **dadurch gekennzeichnet, dass** die elementaren Komponenten binär sind.

6. Verfahren nach einem der Ansprüche 1 bis 4, **dadurch gekennzeichnet, dass** die elementaren Komponenten reale Größen sind, also Werte in der Gesamtheit der realen Zahlen.

7. Verfahren nach einer der Ansprüche 1 bis 6, **dadurch gekennzeichnet, dass** die Auswahl der Individualitäten durch die Rangfolge einer Klassifizierung gemäß der individuellen Zuverlässigkeit, dann durch die Aufteilung in zwei Klassen erfolgt; eine Klasse von ausgezeichneten Individualitäten und eine Klasse von minderwertigen Individualitäten.

8. Verfahren nach Anspruch 7, **dadurch gekennzeichnet, dass** die Grenze zwischen den ausgezeichneten Individualitäten und den minderwertigen Individualitäten durch eine statistische Rechnung über die gesamte oder teilweise Population der Wiederholungen der elementaren Komponenten bewertet wird.

9. Verfahren nach einem der Ansprüche 1 bis 8, **dadurch gekennzeichnet, dass** das digitale Signal repräsentativ für ein festes Bild ist.

10. Verfahren nach einem der Ansprüche 1 bis 8, **dadurch gekennzeichnet, dass** das digitale Signal repräsentativ für eine Sequenz von animierten Bildern ist.

11. Verfahren nach einem der Ansprüche 1 bis 8, **dadurch gekennzeichnet, dass** das digitale Signal repräsentativ für eine Klangsequenz ist.

12. Gerät für die Entschlüsselung von digitalen Tätowierungen, **dadurch gekennzeichnet, dass** es Mittel umfasst, um ein Verfahren nach einem der Ansprüche 1 bis 11 durchzuführen.

## Claims

1. A method for determining a load of a watermark, digital tattoo, in a digital signal, said watermark being composed by repetitions of elementary components of said load, said method aiming at determining a value to be retained for each elementary component, said method comprising, for each elementary component:
- a step (101) of detecting repetitions of the elementary component in the digital signal,
**characterized in that** the method furthermore comprises:
- a step (103) of assigning at least one quality attribute to each repetition of the elementary component, and
- a step (105) of sorting the repetitions of the elementary component according to a function of the quality attributes of these repetitions, and
- a step of selecting certain repetitions, dubbed individualities, of the elementary component to discard the repetitions of overly low quality, and
- a step of fusing the selected repetitions by a weighted summation; the weighting being determined as a function of said at least one quality attribute assigned to each repetition, and
- a step (108) of determining a value to be retained for the elementary component based on a result of the weighted summation.

2. The method as claimed in claim 1, **characterized in that** the quality attribute of each repetition of an elementary component is the reliability of this repetition.

3. The method as claimed in any one of claims 1 to 2, **characterized in that** a quality attribute in the form of a scalar value is evaluated for each repetition of an elementary component.

4. The method as claimed in claim 3, **characterized in that** the repetitions of one and the same elementary component are classed by decreasing attribute value.

5. The method as claimed in any one of claims 1 to 4, **characterized in that** the elementary components are binary.

6. The method as claimed in any one of claims 1 to 4, **characterized in that** the elementary components are real quantities, that is to say values in the set of real numbers.

7. The method as claimed in any one of claims 1 to 6, **characterized in that** the selection of the individualities is performed by way of a classing according to the individual reliabilities, and then by grouping into two classes; a class of the winning individualities and a class of the minor individualities.

8. The method as claimed in claim 7, **characterized in that** the boundary between the domains of the winning individualities and of the minor individualities is evaluated by a statistical computation on the total or partial population of the repetitions of elementary components.

9. The method as claimed in any one of claims 1 to 8, **characterized in that** the digital signal is representative of a still image.

10. The method as claimed in any one of claims 1 to 8, **characterized in that** the digital signal is representative of a sequence of moving images.

11. The method as claimed in any one of claims 1 to 8, **characterized in that** the digital signal is representative of a sound sequence.

12. A digital tattoo decoding device, **characterized in that** it comprises means of implementing a method as claimed in any one of claims 1 to 11.
